# EUROPÄISCHE PATENTSCHRIFT

(11) **EP 1 982 508 B1**
(45) Veröffentlichungstag und Bekanntmachung des Hinweises auf die Patenterteilung: **18.06.2014**
(21) Anmeldenummer: 07703831.3
(22) Anmeldetag: 12.01.2007
(51) Int. Cl.: H04M 3/493

(54) **VORRICHTUNG UND VERFAHREN ZUM BEREITSTELLEN EINER VOICE BROWSERFUNKTIONALITÄT.**
DEVICE AND METHOD FOR THE CREATION OF A VOICE BROWSER FUNCTIONALITY
DISPOSITIF ET PROCÉDÉ FOURNISSANT UNE FONCTIONNALITÉ DE NAVIGATEUR VOCAL

(30) Priorität: 31.01.2006 DE 102006004442
(43) Veröffentlichungstag der Anmeldung: 22.10.2008
(73) Patentinhaber: Nokia Solutions and Networks GmbH & Co. KG, 81541 Munich (DE)
(72) Erfinder: FREUND, Detlev, 10707 Berlin (DE); LÖBIG, Norbert, 64291 Darmstadt (DE)
(74) Vertreter: Weidel, Gottfried
(86) Internationale Anmeldenummer: PCT/EP2007/050291
(87) Internationale Veröffentlichungsnummer: WO 2007/088095

(56) Entgegenhaltungen:
- US-A1- 2003 091 025
- W3C: "Voice Browser Interoperation: Requirements (W3c Working Draft)" INTERNET CITATION, [Online] 8. August 2002 (2002-08-08), XP002273460 Gefunden im Internet: URL:http://www.w3.org/TR/2002/WD-vbi-reqs- 20020808/> [gefunden am 2004-03-01]
- DANIELSEN P J: "THE PROMISE OF A VOICE-ENABLED WEB" COMPUTER, IEEE SERVICE CENTER, LOS ALAMITOS, CA, US, Bd. 33, Nr. 8, 1. August 2000 (2000-08-01), Seiten 104-106, XP000987575 ISSN: 0018-9162

## Beschreibung

Neuere Kommunikationsarchitekturen sehen die Trennung vermittlungstechnischer Funktionen in verbindungsdienstbezogene und den Transport der Nutzinformationen (Bearer Control) betreffende Anteile vor. Hieraus resultiert eine Trennung von Verbindungsaufbau und Beareraufbau. Ein derartiges Konzept bedeutet für den Kommunikationsverkehr, dass keine starke Bindung an die Netztopologie mehr gegeben ist.

In derartigen modernen Kommunikationsarchitekturen werden Ansage- und Dialogdienste bereitgestellt,die funktional in Vermittlungsknoten integriert sind oder als eigenständige Media Server im Netz angeordnet sein können. Der Media Server stellt dabei eine Mehrzahl von Grundfunktionen zur Verfügung, die als Basis des jeweiligen Ansage- und Dialogdienstes fungieren. Beispielhaft hierzu können das Ausspielen einer aufgezeichneten, eventuell aus mehreren Teilen dynamisch zusammengesetzten Ansage, eine Sprachsynthese nach vorgegebenem Text in gewünschter Stimme, eine interaktive Dialog-Unterstützung auf Basis von Toneingaben (DTMF) via Endgerät, eine Spracherkennung, Sprechererkennung-/ Verifikation oder das Aufzeichnen und Ausspielen von Sprach- und Videonachrichten, usw. genannt werden.

In der Druckschrift US 2003/091025 A1 (CELI JOSEPH [US] ET AL CELI JR JOSEPH [US] ET AL) 15. Mai 2003 (2003-05-15) wird ein skalierbares Call Management System beschrieben, welches mindestens einen Voice Server umfasst, welcher einen oder mehrere Voice Browser bereitstellt. Hierbei hat der Voice Server einen Kommunikationsport, über welchen Audio-Rufanforderungen durch die Voice Browser bearbeitet werden können. Jeder Voice Browser hat einen Port Alias, über welchen Rufanforderungen bearbeitet werden können. Das System kann eine Umsetztabelle enthalten zur Abbildung von Port Alias und zugeordnetem Voice Browser.

Das Dokument "Voice Browser Interoperation: Requirements (W3C Working Draft)", Internet Citation, [Online] 8. August 2002 (2002-08-08), XP002273460, gefunden im Internet: URL: http://www.w3.org/TR2002/WD-vbi-regs-20020808/, [gefunden am 2004-03-01] ist eine Anforderungsbeschreibung zur Voice Browser Interoperation, welches die Anforderungen beschreibt, durch welche unterschiedliche Call Sites, die an Call Transfers beteiligt sind, zusammenarbeiten und gemeinsame Daten benutzen, um eine übergangslose Erfahrung für den Anrufer zu schaffen.

Ist der Service-/ Dienstanbieter an maximaler Flexibilität, kurzen Bereitstellungszeiten und Effizienz interessiert, wird er bei der Definition von Diensten von sogenannten Service Creation Environment Funktionen unterstützt, deren Ausgabe dann die Beschreibung des gewünschten vermittlungstechnischen Ablaufs über vorzugsweise standardisierte Beschreibungssprachen wie beispielsweise CCXML oder CSTAXML ist. Die notwendigen Beschreibungen der Ansagen- und Dialoganteile erfolgt vorzugsweise ebenso in standardisierter Form z. B. via VoiceXML. In manchen Geschäftsmodellen können diese Beschreibungen auch von Kunden des Netzbetreibers bereitgestellt sein und sich häufig ändern.

VoiceXML ist ein XML-Schema zum Schreiben von Webseiten für Telefonanwendungen. Diese basieren auf Sprache (Hören von Anweisungen und Eingabe von Befehlen per Sprache/DTMF). Deshalb unterstützt Voice-XML folgende Features:
- Gesprochene Eingaben (synthetische Sprache)
- Ausgaben von Audiodateien und -streams
- Erkennung von gesprochenen Wörtern und Sätzen
- Erkennung von Tonwahl (DTMF)
- Aufnahme gesprochener Eingaben
- Kontrolle des Dialogflusses
- Telefoniekontrolle (Anruftransfer und Auflegen)

Vorläufer von VoiceXML sind Phone Markup Language (PML), VoxML, SpeechML, TalkML, VoiceHTML. Eine Alternative zu VoiceXML ist SALT.

Allgemein analysiert ein Voice-Browser den in Form einer einzigen oder einer Folge von Dateien, sog. Voice-Seiten, zusammengefaßten, einen Voice-Dialog beschreibenden Markupcode, parst und interpretiert ihn und bereitet ihn für das Medium Telefon auf. Für die eigentliche Ein- und Ausgabe über das Telefon muss der Browser für die Nutzung der folgenden Ressourcen mit der Hard- und Software der Media Server Plattform interagieren:
- Abruf der den Dialog beschreibenden Voice-Seiten/Dateien von einem Speichermedium
- Abruf von in zugehörigen Voice-Seite referenzierten Dateien z. B. mit auszugebender Sprache, auszuspielenden Aufzeichnungen, Grammar-Informationen, sonstigen die Ein - und Ausgabe charakterisierende und unterstützenden Informationen oder auch ggf. zugehöriger Video-Information
- Steuerung des Anrufs und zugehöriger vermittlungstechnischer Vorgänge
- Erkennung/Aufnahme von DTMF oder Sprache (ASR)
- Erkennung und Verifikation eines Sprechers
- Ausgabe von Audiodateien
- Erzeugung von Sprachausgaben in gewünschter Stimme aus Text (TTS)

Eine Ansage ist gemäß dem voranstehenden Sinne eine Spezialform eines Voice-Dialogs. Der gegenwärtig gebräuchlichste Standard für den Beschreibungscode eines Voice-Browsers ist VoiceXML.

Im Rahmen der Einführung eines Dienstes oder eines Service in das Netz werden diese Beschreibungen in die Vermittlungsknoten, Application und/ oder Media Server eingebracht. Dies kann a priori oder bei Bedarf nach Freischaltung des Service erfolgen. Insbesondere wird hierbei die VoiceXML Beschreibung den Media Server Plattformen verfügbar gemacht. Grundsätzlich bedarf es zur Bearbeitung der VoiceXML-Beschreibung auf einer Media Server Plattform einer Browser-Funktion oder -Funktionalität, die die VoiceXML-Seiten liest und interpretiert, so dass die benötigten Grundfunktionen des Media Servers dem gewünschten Service zugeordnet und gesteuert werden können.

Gegenwärtig sind verschieden leistungsfähige Browser kommerziell verfügbar, die sich z. B. hinsichtlich Funktionsumfang, Lizenzkosten und Anforderungen an die Rechnerplattform (CPU Performanz, Speicher, maximale Anzahl paralleler Aktivierungen in Abhängigkeit von HW und Betriebssystem) stark unterscheiden. So kann beispielsweise ein erster Browser nur für Ansagebetrieb, oder auch DTMF Dialoge geeignet sein, aber ohne Lizenzkosten verwendet werden, ein zweiter Browser kann als Open Source Code verfügbar sein und eingesetzt werden, mag jedoch den Nachteil großen Ressourcen-Bedarfs haben und/ oder nicht dem neuesten Standard entsprechen und/ oder dem Netzbetreiber nur geringen Service Level bieten, oder ein dritter Browser kann hohe Lizenzkosten verursachen bei gleichzeitig vollem Leistungsumfang des Standards und ökonomischem Ressourcenverbrauch.

Beim Stand der Technik werden Media Server mit lediglich einem einzigen, ggf. universellen VoiceXML Browser verwendet. Die Problematik bei derartigen, am Markt erhältlichen Produkten liegt in der hohen Komplexität, die sie auch bei einfachen Anwendungen bereitstellen. Als Konsequenz kann eine Optimierung nur durch Eigenentwicklung erreicht werden. Schliesslich sind keine am Markt angebotenen VoiceXML Standardprodukte im Hinblick auf Kostenoptimalität erhältlich, die den wechselnden Forderungen unterschiedlicher Applikationsszenarien gerecht werden.

Der Erfindung liegt die Aufgabe zugrunde, einen Weg aufzuzeigen und eine Vorrichtung anzugeben, mit der eine für alle Dienste optimale VoiceXML Browserfunktionalität bereitgestellt werden kann.

Die Erfindung wird ausgehend von den in den Oberbegriffen der Patentansprüche 1 und 7 angegebenen Merkmale durch die in den kennzeichnenden Teilen beanspruchten Merkmale gelöst.

Der Vorteil der Erfindung ist darin zu sehen, dass ein Media Server, der eine Mehrzahl von unterschiedlichen VoiceXML Browser Funktionen gleichzeitig einsetzt, derart betrieben werden kann, dass die zu bedienenden Applikationen hinsichtlich der jeweils gewünschten Funktionalität voll unterstützt werden und zugleich Optimalität bzgl. der eingesetzten Ressourcen des Media Servers erreicht wird. Hierzu dient die geeignete Konfiguration des Media Servers (CPU, Memory, Lizenzen, usw.) a priori und im laufenden Betrieb ebenso, wie die geeignete Zuordnung der HW Plattform (HMP/ DSP) für die Media Stream Behandlung pro Call/ Aktivierung. Die HW Plattform kann somit in 2 Anteile aufgeteilt werden, wobei der eine Anteil auf der HMP oder DSP Plattform und der verbleibende Anteil in der Media Control angeordnet ist.

Ferner ist mit der Erfindung Kostenoptimalität insofern sichergestellt, da Lizenzkosten vermieden bzw. gering gehalten werden können. Auch das Vorsehen einer Mehrzahl unterschiedlicher VoiceXML Browser in einem Media Server verbessert zusätzlich den Kostenaspekt.

Ein weiterer Vorteil der Erfindung ist darin zu sehen, dass der VoiceXML Standard hinsichtlich der Deklaration von Ressourcen, gegebenenfalls über eine Mehrzahl von zusammengehörigen VoiceXML Seiten erweiterbar ist. Hierbei wird der Typ der Ressource und die erwartete Auslastung der Ressource als Teil der Ressourcen-Deklaration in der VoiceXML Seite mitgeführt. Hierbei wird die den RTP terminierende Plattform (DSP oder HMP) in Abhängigkeit der Klassifizierung und aufgrund von Lastgesichtspunkten zugeordnet. Ferner besteht die Möglichkeit, den Media Server internen Bearer Redirect zur weiteren Optimierung des Ressourcenbedarfs zu nutzen.

Schliesslich ist ein weiterer Vorteil im Hinblick auf die Ressourcenoptimierung dadurch gegeben, dass die HMP und DSP Ressourcen mit gegebenenfalls unterschiedlichen Eigenschaften in einem Media Server parallel verfügbar sind. Die Dekomposition von Browser Instanz und DSP/ HMP Funktionalität auf verschiedene HW Komponenten des Media Servers trägt ebenfalls zur besseren Lastverteilung bei.

Vorteilhafte Ausgestaltungen der Erfindung sind in den Unteransprüchen angegeben.

Die Erfindung wird im folgenden anhand eines figürlich dargestellten Ausführungsbeispiels näher erläutert.

Es zeigen:
- Figur 1: die Einbettung eines Media Servers im Netz
- Figur 2: die Verhältnisse im Media Server

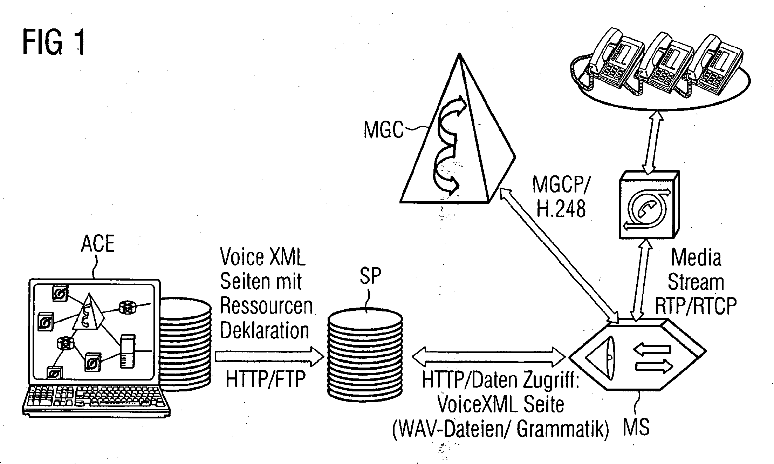

Fig. 1 zeigt die Schnittstellen eines Media Servers MS zu seiner Umgebung. Demgemäss ist ein Server aufgezeigt, auf dem ein Programm ACE (Announcement Creation Enviroment) zum Ablauf gelangt. Dieses unterstützt den Designer bei der Konzeption neuer Leistungsmerkmale, Dienste und Services. Als Ergebnis der Konzeption von Ansage- und Dialoganteilen eines Dienstes werden VoiceXML Seiten erstellt, die in eine Speichervorrichtung SP eingeschrieben werden. Die Speichervorrichtung SP kann Teil des Media Servers MS sein, soll gemäss vorliegendem Ausführungsbeispiel aber vorzugsweise als zentrale, alleinstehende Einrichtung (z. B. als Server) im Netz ausgebildet sein. Die mit Hilfe des Programmes ACE erzeugten Seiten müssen erst auf die Speichervorrichtung SP gebracht werden, bevor sie dem Voice Server zum Abspielen zur Verfügung stehen. Die Übertragung der VoiceXML Seiten zur Speichervorrichtung SP erfolgt beispielsweise über HTTP oder FTP Protokoll. Alle vermittlungstechnischen Vorgänge, insbesondere die Durchschaltung eines Rufs auf einen Media Server, werden von einem Media Gateway Controller MGC gesteuert und überwacht.

Es ist nun vorgesehen, die VoiceXML Seiten mit der Deklaration von Ressourcen zu versehen. Diese Information wird dann im Rahmen der Serviceanforderung zur Auswahl einer der mehrfach angeordneten Browserfunktionen herangezogen.

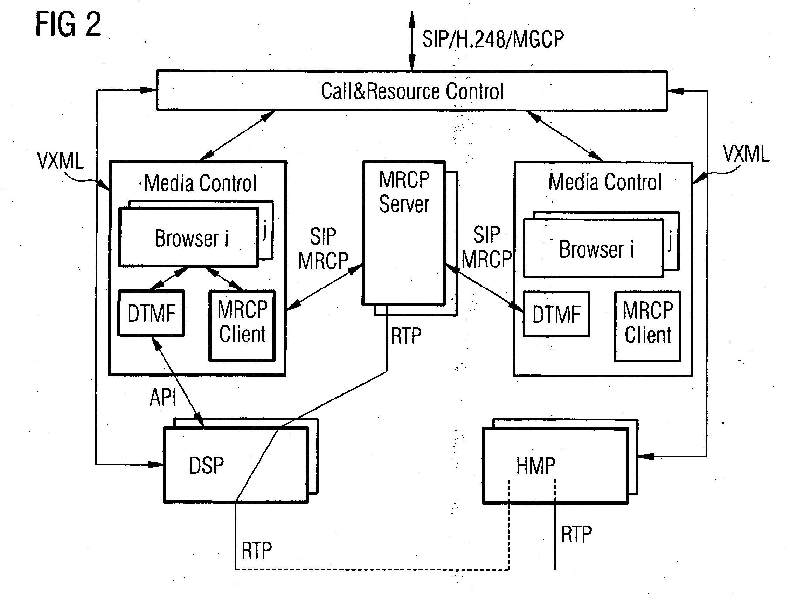

Fig. 2 zeigt den Media Server MS im Detail. Demgemäss ist eine Call&Resource Control Einrichtung vorgesehen, die eine direkte Schnittstelle zur Signalisierung aufweist. Sie nimmt die erste Bewertung eines eintreffenden Rufes vor. Ferner wird von ihr nach Massgabe des Auswerteergebnisses der Bearer einer Plattform (DSP oder HMP) zugeordnet und der Auftrag einer Media Control Einrichtung übergeben. Deren Aufgabe besteht im Anfordern der VoiceXML Seiten und im Browsing, d. h. im Lesen und Interpretieren der VoiceXML Seiten. Hierzu ist in der Media Control Einrichtung mindestens eine Browserfunktionalität vorgesehen. Erfindungsgemäss sind mehrere Browserfunktionalitäten im Media Server MS vorgesehen. Mindestens ein MRCP Server dient der Sprachverarbeitung (beispielsweise Spracherkennung, Sprechererkennung/-verifikation, Sprachsynthese, usw.) und wird von einem MRCP Client der Media Control Einrichtung beauftragt. Ferner zeigt Fig. 1 die Plattformen DSP und HMP, die den Nutzdatenstrom zum fernen Teilnehmer terminieren.

Die in Fig. 2 gezeigten MRCP Server sind Bestandteil des Media Servers MS, sie können aber auch als externe Server ausgebildet sein. Abhängig von der VoiceXML Seite können MRCP Server unterschiedlicher Partner mit u. U. unterschiedlichen Eigenschaften durch einen oder eine Mehrzahl von Media Servern angesprochen werden.

Die Mehrzahl unterschiedlicher VoiceXML Browser kann unterschiedliche Versionen des VoiceXML Standards ebenso reflektieren, wie auch kundenspezifische proprietäre Erweiterungen des VoiceXML Standards. Weitere, zu dem VoiceXML-Standard alternative Browser können ebenfalls enthalten sein, wie z. B. Browser für SALT.

Die Zuordnung von Hardware und Browser erfolgt unter Berücksichtigung der Last. Pro Hardware-Einheit (z. B. Baugruppe) gibt es eine Indikation der momentanen Last, die gegen den zu erwartenden Lastbedarf, der durch das Browsing und die Bearbeitung der Seite entsteht, bilanziert werden kann. Der grobe zu erwartende bzw. vorzuhaltende maximale Performanzbedarf ist Teil der Ressourcendeklaration der VoiceXML Seite. Eine Folge zusammengehöriger VoiceXML-Seiten kann mit dem kumulierten maximalen oder auch dem durchschnittlich zu erwartenden Performanzbedarf in der Startseite deklariert werden.

Zur Ermittlung des maximalen bzw. des durchschnittlichen Performanzbedarfs für das Browsing einer VoiceXML Seite kann der Media Server MS in einen Betriebsmodus versetzt werden, in dem eine VoiceXML Seite dem vielfachen parallelen Browsing inklusive korrelierten Aktivitäten auf einer reservierten CPU Baugruppe des Systems unterzogen wird. Diese Funktion ist vorzugsweise Teil des Service Creation Environments und sorgt für die automatische, jeweils maximale bzw. typische Performanzbedarfsaussage in der Ressourcendeklaration der VoiceXML Seite. Die zur Performanzermittlung geeignete VoiceXML-Seite ist jeweils aus der tatsächlichen VoiceXML-Seite abgeleitet. In der abgeleiteten Seite zur Ermittlung der maximalen Performanzbedarfs werden beispielsweise alle Abfragen vermieden, benötigte Inputs, wie MRCP Server Eingaben, HMP/ DSP Nachrichten sind enthalten und können damit durch die reservierte HW emuliert werden.

Statistikdaten umfassen insbesondere Ausverkauf von Ressourcen und Prozessor-Überlastaspekte. Die Bewertung der Statistikdaten führt zu freilaufenden Fehlermeldungen an den Betreiber, aufgrund derer die Konfiguration (z. B. HW, SW Lizenzen) des Media Servers angepasst werden kann.

Kommt ein Ruf mittels Signalisierung (z. B. SIP, H.248, MGCP) in die zentrale Call&Resource Control Einrichtung des Media Servers MS herein, wird im Rahmen eines ersten Verfahrensschrittes versucht, aufgrund der adressierten Portnummer, der gewünschten Rufnummer, des adressierten Service oder anderer Bestandteile der Signalisierung, die geeignete Hardware Plattform (HMP (Host Media Processing) oder DSP (Digital Signal Processing)) zuzuordnen. Dies geschieht unter Berücksichtigung der verfügbaren freien Ressourcen zum Zeitpunkt der Belegung. Kann hierdurch eindeutig auf eine Hardware-Plattform mit reduzierter/ eingeschränkter Funktion (z. B. HMP) geschlossen werden, so wird diese zugeordnet, im anderen Falle wird vorzugsweise eine universell verwendbare Plattform zugeordnet (z. B. DSP), wenn eine derartige gemäß Lastindikation verfügbar sein sollte.

Der Media Stream wird nun zwischen dem anfordernden fernen Endpunkt und der zugeordneten Plattform aufgebaut. Im Rahmen dieses und eventuell folgenden Signalisierungsaustausches können weitere, die Art des bereitzustellenden Media Service charakterisierende Signalisierungsinformationen eintreffen. Diese können typischerweise weitere Information enthalten, die der Identifizierung der abzuarbeitenden VoiceXML Beschreibung dient.

Kann aufgrund des ersten Verfahrensschrittes die Art des bereitzustellenden Media Service nicht ermittelt werden, wird im Rahmen eines zweiten Verfahrensschrittes die gesamte Signalisierungsinformation zur Bestimmung des Typs der abzuarbeitenden VoiceXML Beschreibung unterworfen und unter Berücksichtigung der momentanen Auslastung der Browser-Funktionen und der sie bereitstellenden HW eine optimale Browser-Funktion auf einer HW-Einheit ausgewählt. Im zweiten Verfahrensschritt können insbesondere der Name der VoiceXML Seite, ein diese identifizierender Index oder im ersten Verfahrensschritt noch nicht vorliegende Signalisierungsparameter ausgewertet werden.

Führt auch der zweite Verfahrensschritt nicht zur Bestimmung der zuzuordnenden Browserfunktion, erhält die Media Control Funktion der gewählten HW von der zentralen Call&Resource Control Einrichtung die Daten der Anforderung, die' Verbindungsdaten des zugehörigen Media Stream und die Information. über den vorläufig zu verwendenden VoiceXML Browser. Die Media Control fordert nun mit diesen Daten die relevante VoiceXML Seite und sukzessive alle referenzierten Dateien von der Speichervorrichtung SP an. Da die notwendige Sicherheit über den zu verwendenden VoiceXML Browser aus dem ersten und zweiten Verfahrensschritt nicht gewonnen werden konnte und die Möglichkeit der Optimierung der zugeordneten Browser-Funktion besteht, erfolgt vor Übergabe der VoiceXML-Seite an die Browser-Funktion als dritter Verfahrensschritt eine Praeanalyse, im Rahmen derer die in der Seite enthaltenen Anforderungen des Service (Version, Sprachverarbeitung, nur Ausgabe, nur DTMF Eingaben usw.) ausgewertet werden.

Der dritte Verfahrensschritt erfolgt damit nur, wenn notwendig. Über den jetzt definierten VoiceXML Standard sind hierfür Erweiterungen, die die Art der benötigten Ressourcen beschreiben, zur Steigerung der Effektivität sinnvoll. Soll einem Endpunkt im Rahmen eines Service eine Folge von VoiceXML Seiten gespielt werden, so ist es sinnvoll, in der Startseite bereits die vorstehende Ressourcendeklaration vorzunehmen, auch wenn in dieser ersten Seite nur ein Teil der Ressourcen benötigt wird. Dies kann vom verwendeten Creation Environment zum Zeitpunkt der Service Definition, vor der Ablage auf dem Speichermedium SP automatisch eingetragen werden. Dadurch werden Fehler vermieden und die benötigten Ressourcen können zum Ablaufzeitpunkt schneller bestimmt werden. Ist nur eine einzige VoiceXML-Seite zu spielen, so erfolgt die Deklaration der Ressourcen ebenfalls am Anfang der Seite zur Vermeidung der dynamischen Ermittlung des Ressourcenbedarfs via vorauseilender zusätzlicher Interpretation der Seite.

Der nun endgültig bestimmte, ausreichende und optimale VoiceXML Browser wird mit der VoiceXML Seite bzw. der ersten VoiceXML Seite einer Folge von VoiceXML Seiten versorgt und aktiviert. Die notwendigen Aktionen hinsichtlich der Führung des RTP und der Behandlung der übertragenen Information wird der Media Control Funktion mitgeteilt.

Soll nur eine Folge von Aufnahmen gespielt werden, so kann das durch Ausgabe vorcodierter Information über die den RTP terminierende Instanz einer General Purpose CPU erfolgen oder durch aktive Kodierung einer fest kodierten Information über eine für Kodierung besonders geeignete DSP Funktion. Die Alternativen werden hierbei durch die Lage des RTP basierten Nutzdatenstroms gemäß der schon getroffenen HW Zuordnung bestimmt.

Soll die Dialogsteuerung durch den fernen Nutzer des Service vermittels Zifferneingabe, also über vermittlungstechnische Töne erfolgen, so muss zusätzlich DTMF erkannt werden. Dies erfolgt vorzugsweise durch die zur Terminierung des Media Streams zugeordnete Funktion (z. B. DSP) und wird der Media Control gemeldet. Entsprechendes gilt im Falle von Generierung von vermittlungstechnisch wirksamen Tönen alternativ zum Ausspielen dieser Töne im Ansagemodus über geeignete vordefinierte Dateien.

Ist Sprachverarbeitung erforderlich, so erfolgt die Einbeziehung entsprechender Ressourcen für TTS, ASR, Sprecheridentifikation und/oder -verifikation. Diese sind als Server organisiert, an die sich u. U. eine Mehrzahl von Media Control Instanzen als Clients wenden. State-of-the-art Signalisierung zwischen Media Control und Speech Processing Ressource ist vorzugsweise standardisiert, z. B. SIP/ MRCP v2. Die Media Control ist hierbei verantwortlich für den Aufbau des Media Stream zwischen terminierender HW Plattform für den RTP und bearbeitender Speech Processing Ressource.

Zur optimalen Verwendung der i.a. sehr teuren ASR Ressourcen werden reine DTMF Dialoge vorzugsweise nicht über MRCP Server geführt. Die den RTP terminierende Instanz hat das DTMF Erkennen zu leisten und der Media Control zurückzumelden. HMP, Media Control, MRCP Server und zentrale Call&Resource Control können prinzipiell auf der gleichen Plattform ablaufen. Im Hinblick auf die MRCP Server kann es sinnvoll sein, eine Mehrzahl von u. U. abgesetzten MRCP Server ansprechen zu können. Genauso kann auch der Fäll der Zuordnung eines u. U. auf der gleichen HW Plattform laufenden MRCP Servers pro Media Control vorkommen.

Sollte es nicht möglich (oder gewollt) sein, dass am Anfang alle Informationen zur Auswahl der benötigten Ressourcen (DSP, HMP) zur Verfügung stehen, besteht auch die Möglichkeit, intern auf andere Ressourcen umzurouten. Befindet sich der Endpunkt auf dem HMP, da zuerst nur eine Ansage zu spielen war, danach in einem zweiten Auftrag (z. B. in der folgenden VoiceXML Seite) aber Informationen einzusammeln sind, so kann der Endpunkt zum Teilnehmer auf dem HMP-port verbleiben, von der übergeordneten Resource Control intern aber von dort zu einer anderen Media Control oder zu einer DSP-Karte geroutet werden, wo dann die geeigneten Ressourcen zur Verfügung stehen.

Dies kann aus Fig. 2 entnommen werden. Der Nutzdatenstrom der Verbindung kommt hier auf der HMP Plattform an. Von dort wird durch die Call&Resource Control/ Media Control eine Weiterleitung (gestrichelt) zu einer DSP-Karte aufgebaut. Dort steht nun die volle Funktionalität zur Verfügung, denn diese Verbindung kann dort genauso, wie ein direkt eintreffender RTP-basierter Nutzdatenstrom behandelt werden. Desweiteren wird auch in diesem Falle der zu verwendende optimale Browser gemäß der voran stehenden Beschreibung aus der Menge der zur Verfügung stehenden Alternativen bestimmt.

## Patentansprüche

1. Verfahren zum Bereitstellen einer Voice Browserfunktionalität (i, j), mit der Ansagen und Dialoge bereitgestellt werden,
wobei mehrere Browserfunktionalitäten vorgesehen werden, wobei bei einem eintreffenden Ruf nach Massgabe von initialen Signalisierungsinformationen und unter Berücksichtigung von Lastkriterien diesem eine geeignete Hardware-Plattform zugeordnet wird,
wobei, falls eine derartige Zuordnung nicht vorgenommen werden kann, die Zuordnung nach Massgabe von weiteren, den initialen Signalisierungsinformationen nachfolgenden Signalisierungsinformationen erfolgt,
wobei, falls auch dann keine Zuordnung vorgenommen werden kann, die relevante Voice Seite von der Speichervorrichtung (SP) angefordert und für diese eine Praeanalyse vorgenommen wird, im Rahmen derer die darin enthaltenen Anforderungen ermittelt werden, und auf dieser Grundlage eine Zuordnung der Browserfunktion erfolgt, und
wobei, falls auch dann noch keine Zuordnung vorgenommen werden kann, eine universell verwendbare Browserfunktionalität (i, j) zugeordnet wird.

2. Verfahren nach Anspruch 1,
**dadurch gekennzeichnet,**
**dass** ein grob zu erwartender Performanzbedarf als Teil der Ressourcendeklaration der Voice Seite eingetragen ist, der durch das Browsing der Seite verursacht wird und der gegen die verfügbare Performanz der Hardware-Plattform im Rahmen der Zuordnung bilanziert wird.

3. Verfahren nach einem der Ansprüche 1, 2,
**dadurch gekennzeichnet,**
**dass** in der initialen Signalisierungsinformationen die adressierte Portnummer, gewünschte Rufnummer des adressierten Service zur Auswahl der Browserfunktion und Hardware-Plattform herangezogen wird.

4. Verfahren nach Anspruch 1 bis 3,
**dadurch gekennzeichnet,**
**dass** die Lastkriterien als momentane Auslastung der Browser-Funktionen und der sie bereitstellenden Hardware im Hinblick auf eine optimale Browserfunktionalität (i, j) definiert sind.

5. Verfahren nach einem der vorstehenden Ansprüche,
**dadurch gekennzeichnet,**
**dass** die Zuordnung der Hardware-Plattform zur Terminierung des Nutzdatenstroms und zur Steuerung des Ansage-/Dialogablaufs vorgenommen wird.

6. Verfahren nach einem der vorstehenden Ansprüche,
**dadurch gekennzeichnet,**
**dass** der Markupcode des Voice Browsers durch VoiceXML definiert ist.

7. Verfahren nach einem der vorstehenden Ansprüche,
**dadurch gekennzeichnet,**
**dass** im Rahmen der Praeanalyse die Anforderungen ermittelt werden aus einer Version des Browsers, aus einer vorgesehenen Sprachverarbeitung, aus einer vorgesehenen Ausgabe oder aus einer vorgesehenen DTMF Eingabe.

8. Vorrichtung zum Bereitstellen einer Voice Browserfunktionalität (i, j), mit der Ansagen und Dialoge bereitgestellt werden,
bei der mehrere Browserfunktionalitäten (i, j) vorgesehen sind, und bei der wenigstens eine Logik vorgesehen ist, die eine Zuordnung einer Hardware-Plattform und einer Browserfunktionalität (i, j) bereitstellt,
wobei die Zuordnung nach Massgabe von initialen Signalisierungsinformationen und unter Berücksichtigung von Lastkriterien erfolgt,
wobei, falls eine derartige Zuordnung nicht vorgenommen werden kann, die Zuordnung nach Massgabe von weiteren, den initialen Signalisierungsinformationen nachfolgenden Signalisierungsinformationen erfolgt,
wobei, falls auch dann keine Zuordnung vorgenommen werden kann, die relevante Voice Seite von der Speichervorrichtung (SP) angefordert und für diese eine Praeanalyse vorgenommen wird, im Rahmen derer die darin enthaltenen Anforderungen ermittelt werden, und auf dieser Grundlage eine Zuordnung der Browserfunktion erfolgt, und
wobei, falls auch dann noch keine Zuordnung vorgenommen werden kann, eine universell verwendbare Browserfunktionalität (i, j) zugeordnet wird.

9. Vorrichtung nach Anspruch 8,
bei der die Browserfunktionalitäten (i, j) im Media Server (MS) angeordnet sind.

10. Vorrichtung nach einem der Ansprüche 8, 9,
bei der eine der mehrfach vorhandenen Browserfunktionalitäten (i, j) durch Ressourcenbedarf und Lastkriterien auswählbar ist.

11. Vorrichtung nach einem der Ansprüche 8, 9, 10,
bei der die mehreren Voice Browserfunktionalitäten (i, j) durch VoiceXML definiert sind.

12. Vorrichtung nach einem der Ansprüche 8 bis 11,
bei der im Rahmen der Praeanalyse die Anforderungen ermittelt werden aus einer Version des Browsers, aus einer vorgesehenen Sprachverarbeitung, aus einer vorgesehenen Ausgabe oder aus einer vorgesehenen DTMF Eingabe.

## Claims

1. Method for providing a voice browser functionality (i, j) by means of which announcements and dialogues are provided, wherein a number of browser functionalities are provided,
wherein in the case of an incoming call, a suitable hardware platform is allocated to it as determined by initial signaling information and taking into consideration load criteria, wherein, if such an allocation cannot be effected, the allocation is effected as determined by other signaling information following the initial signaling information,
wherein, if no allocation can then be effected, either, the relevant voice page is requested from the storage device (SP) and a pre-analysis is carried out for it, during which the requests contained therein are determined and the browser function is allocated on this basis, and
wherein, if no allocation can then be effected, either, a universally usable browser functionality (i, j) is allocated.

2. Method according to Claim 1,
**characterized in that**
a performance requirement roughly to be expected is entered as part of the resource declaration of the voice page, which is caused by browsing the page and which is balanced against the available performance of the hardware platform during the allocation.

3. Method according to one of Claims 1, 2,
**characterized in that**
in the initial signaling information, the port number addressed, required directory number of the service addressed is utilized for selecting the browser function and hardware platform.

4. Method according to Claim 1 to 3,
**characterized in that**
the load criteria are defined as instantaneous utilization of the browser functions and of the hardware providing them with regard to an optimum browser functionality (i, j).

5. Method according to one of the preceding claims,
**characterized in that**
the hardware platform is allocated for terminating the user data stream and for controlling the announcement/dialogue sequence.

6. Method according to one of the preceding claims,
**characterized in that**
the markup code of the voice browser is defined by VoiceXML.

7. Method according to one of the preceding claims,
**characterized in that**
during the pre-analysis, the requirements are determined from a version of the browser, from a voice processing provided, from an output provided or from a DTMF input provided.

8. Device for providing a voice browser functionality (i, j) by means of which announcements and dialogues are provided, wherein a number of browser functionalities (i, j) are provided and wherein at least one logic is provided which provides an allocation of a hardware platform and of a browser functionality (i, j),
wherein the allocation takes place as determined by initial signaling information and taking into consideration load criteria,
wherein, if such an allocation cannot be effected, the allocation is effected as determined by other signaling information following the initial signaling information, wherein, if no allocation can then be effected, either, the relevant voice page is requested from the storage device (SP) and a pre-analysis is carried out for it, during which the requests contained therein are determined and the browser function is allocated on this basis, and
wherein, if no allocation can then be effected, either, a universally usable browser functionality (i, j) is allocated.

9. Device according to Claim 8,
wherein
in that the browser functionalities (i, j) are arranged in the media server (MS).

10. Device according to one of Claims 8, 9,
wherein
one of the several browser functionalities (i, j) provided can be selected by resource requirement and load criteria.

11. Device according to one of Claims 8, 9, 10,
wherein
the number of browser functionalities (i, j) are defined by VoiceXML.

12. Device according to one of Claims 8 to 11,
wherein
during the pre-analysis, the requirements are determined from a version of the browser, from voice processing provided, from an output provided or from a DTMF input provided.

## Revendications

1. Procédé pour fournir une fonctionnalité de navigateur vocal (i, j) permettant de fournir des annonces et des dialogues,
- plusieurs fonctionnalités de navigateur étant prévues,
- dans le cas d'un appel entrant, une plate-forme hardware appropriée étant associée à celui-ci selon des informations de signalisation initiales et compte tenu de critères de charge,
- si une telle association ne peut pas être effectuée, l'association étant effectuée selon d'autres informations de signalisation qui font suite aux informations de signalisation initiales,
- s'il n'est pas possible d'effectuer une association même dans ce cas, la page vocale pertinente étant demandée au dispositif de mémoire (SP) et une pré-analyse étant effectuée pour celle-ci, dans le cadre de laquelle les exigences contenues dans celle-ci sont déterminées, et une association de la fonction de navigateur étant effectuée sur cette base, et,
- s'il n'est toujours pas possible d'effectuer une association même dans ce cas, une fonctionnalité de navigateur (i, j) d'utilisation universelle étant associée.

2. Procédé selon la revendication 1, **caractérisé en ce qu'**un besoin de performance grossièrement attendu est enregistré en tant que partie de la déclaration de ressources de la page vocale qui est causée par la navigation de la page et pour laquelle est établi un bilan la comparant avec la performance disponible de la plate-forme hardware dans le cadre de l'association.

3. Procédé selon l'une des revendications 1, 2, **caractérisé en ce que**, dans les informations de signalisation initiales, il est fait appel au numéro de port adressé ou au numéro d'appel souhaité du service adressé pour sélectionner la fonction de navigateur et la plate-forme hardware.

4. Procédé selon la revendication 1 à 3, **caractérisé en ce que** les critères de charge sont définis en tant que degré d'utilisation instantané des fonctions de navigateur et du hardware qui les fournit, en vue d'une fonctionnalité de navigateur optimale (i, j).

5. Procédé selon l'une des revendications précédentes, **caractérisé en ce que** l'association de la plate-forme hardware est effectuée pour terminer le flux de données utiles et pour piloter le déroulement de l'annonce/du dialogue.

6. Procédé selon l'une des revendications précédentes, **caractérisé en ce que** le code markup du navigateur vocal est défini par VoiceXML.

7. Procédé selon l'une des revendications précédentes, **caractérisé en ce que**, dans le cadre de la pré-analyse, les exigences sont déterminées à partir d'une version du navigateur, à partir d'un traitement vocal prévu, à partir d'une production en sortie prévue ou à partir d'une saisie DTMF prévue.

8. Dispositif pour fournir une fonctionnalité de navigateur vocal (i, j) permettant de fournir des annonces et des dialogues,
- dans lequel plusieurs fonctionnalités de navigateur (i, j) sont prévues et au moins une logique est prévue, laquelle fournit une association d'une plate-forme hardware et d'une fonctionnalité de navigateur (1, j),
- l'association étant effectuée selon des informations de signalisation initiales et compte tenu de critères de charge,
- si une telle association ne peut pas être effectuée, l'association étant effectuée selon d'autres informations de signalisation qui font suite aux informations de signalisation initiales,
- s'il n'est pas possible d'effectuer une association même dans ce cas, la page vocale pertinente étant demandée au dispositif de mémoire (SP) et une pré-analyse étant effectuée pour celle-ci, dans le cadre de laquelle les exigences contenues dans celle-ci sont déterminées, et une association de la fonction de navigateur étant effectuée sur cette base, et,
- s'il n'est toujours pas possible d'effectuer une association même dans ce cas, une fonctionnalité de navigateur (i, j) d'utilisation universelle étant associée.

9. Dispositif selon la revendication 8, dans lequel les fonctionnalités de navigateur (i, j) sont situées dans le serveur média (MS).

10. Dispositif selon l'une des revendications 8, 9, dans lequel l'une des fonctionnalités de navigateur (i, j) redondantes peut être sélectionnée par le besoin de ressources et des critères de charge.

11. Dispositif selon l'une des revendications 8, 9, 10, dans lequel les fonctionnalités de navigateur vocal (i, j) redondantes sont définies par VoiceXML.

12. Dispositif selon l'une des revendications 8 à 11, dans lequel les exigences sont, dans le cadre de la pré-analyse, déterminées à partir d'une version du navigateur, à partir d'un traitement vocal prévu, à partir d'une production en sortie prévue ou à partir d'une saisie DTMF prévue.
